(19) Europäisches Patentamt
European Patent Office
Office européen des brevets

(11) **EP 1 769 668 B1**

(12) **EUROPÄISCHE PATENTSCHRIFT**

(45) Veröffentlichungstag und Bekanntmachung des Hinweises auf die Patenterteilung:
**11.02.2009 Patentblatt 2009/07**

(51) Int Cl.:
***A01D 41/14*** *(2006.01)*

(21) Anmeldenummer: **06018953.7**

(22) Anmeldetag: **11.09.2006**

(54) **Erntevorsatzgerät mit Schwenkrahmen für landwirtschaftliche Arbeitsmaschinen**

Harvester head with pivoting frame for agricultural machines

Tête de récolte avec châssis pivotant pour machines agricoles

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **29.09.2005 DE 102005046883**

(43) Veröffentlichungstag der Anmeldung:
**04.04.2007 Patentblatt 2007/14**

(73) Patentinhaber: **CLAAS Saulgau GmbH**
**88348 Bad Saulgau (DE)**

(72) Erfinder:
• **Albinger, Bernd**
**88454 Hochdorf (DE)**
• **Fischer, Bernhard**
**88379 Unterwaldhausen (DE)**

(56) Entgegenhaltungen:
**EP-A1- 0 890 301      DE-A1- 2 000 478**
**DE-A1- 2 026 190      DE-A1- 3 605 933**

## Beschreibung

Die Erfindung betrifft ein Erntevorsatzgerät mit Schwenkrahmen nach dem Oberbegriff des Anspruchs 1. Die Verklappung soll insbesondere der Reduzierung der Transportbreite dienen. Dazu ist ein Verklappungswinkel bis zu etwa 180° vorgesehen, wobei der Antriebsstrang eine Gelenkwelle umfasst, die an der Verklappung und damit an der Schwenkbewegung teilnimmt, und wobei die Schwenkbewegung des Antriebsstrangs (Gelenkwelle) über ein Koppelgetriebe so gesteuert wird, dass sie nicht manuell abgekoppelt werden muss.

## Stand der Technik

Landwirtschaftliche Maschinen mit Schwenkrahmen sind in vielfältiger Art prinzipiell bekannt. Die EP 0 890 301 A1 beispielsweise beschreibt eine derartige landwirtschaftliche Maschine unter dem Begriff Schwenkrahmen eines Erntevorsatzgerätes an landwirtschaftlichen Arbeitsmaschinen. Derartige Emtevorsatzgeräte werden vorrangig an selbstfahrende Mähdrescher oder Häcksler angebaut, deren Arbeitsbreite weit über der zulässigen Transportbreite liegt. Für den Straßentransport sind Emtevorsatzgeräte dieser Art entweder von der Trägermaschine abzubauen oder an ihr durch geeignete Schwenk-, oder Klappmechanismen in ihrer Lage so zu verändern, dass die zulässigen Transportabmessungen derartiger Erntevorsatzgeräte nicht überschritten werden. Das dort beschriebene Vorsatzgerät weist Schwenkrahmen auf, die das eigentliche Maschinengestell bilden, wobei die äußeren Schwenkrahmen um etwa 90° in vertikaler Richtung nach oben verklappt werden, um die Transportbreite zu verringern.

In der DE 43 22 263 A1 hingegen werden vorzugsweise für Mähfahrzeuge, deren Arbeitsorgane ebenfalls die für den Straßenverkehr zulässige Transportbreite überragen, die Arbeitsorgane antriebsseitig vom Motor des Arbeitsfahrzeuges mittels Umschlingungsantriebe angetrieben. Beschrieben wird dort ein Verfahren zum Verschwenken der das Arbeitsfahrzeug nach außen überragenden Arbeitsorgane um etwa aufrechte Achsen nach vom in Fahrtrichtung, wobei diese Arbeitsorgane sich nach dem Verschwenken in Ihre Transportposition unterhalb des angehobenen, dem Arbeitsfahrzeug vorgelagerten, Arbeitsorgan befinden. In diesem Fall werden die außenliegenden Arbeitsorgane in einer etwa horizontalen Ebene um 90° nach vom verschwenkt. Antriebsseitig werden die Arbeitsorgane vom Motor des Arbeitsfahrzeuges mittels Umschlingungsantrieb angetrieben.

Die EP 0 056 118 A1 beschreibt ein zusammenfaltbares und auffaltbares Gerät oder Werkzeugträger für landwirtschaftliche Maschinen mit hydraulischer Schwenkeinrichtung. Dabei sind beidseitig an einem Trägerhauptabschnitt Ausleger in Scharnieren an dem Trägerhauptabschnitt angelenkt, die um in Fahrtrichtung zeigende Scharnierachsen um etwa 180° verschwenkt werden können und übereinander über dem Trägerhauptabschnitt zur Verringerung der Transportbreite abgelegt werden können. Dabei beschreibt diese Schrift Bodenbearbeitungswerkzeuge und lässt dabei offen, ob es sich dabei auch um angetriebene Bodenbearbeitungswerkzeuge handeln kann.

Die DE 2 026 190 beschreibt ein teilbares Mähbrett für einen Mähdrescher, bei dem die Seitenteile zur Überführung in die Transportstellung über Parallelogrammsystem eine Parallelverschiebung erfahren und über das Mittelteil verschoben werden. Die dort beschriebenen Antriebselemente des Antriebsstrangs bestehen aus einer teleskopisch ausgebildeten Gelenkwelle mit Kreuzkupplungen bzw. Kreuzgelenken. Die Antriebsverbindung bleibt dabei aber in Form einer Dauerkupplung durch die Kreuzkupplungen auch in der Transportstellung bestehen.

Große Klappwinkel etwa die von 180° und mehr verlangen entsprechend große Bauräume mit Weitwinkelkreuzgelenken. Stehen diese Bauräume nicht zur Verfügung muss die Gelenkwelle manuell vor dem Verklappen abgebaut werden, soll sie beim Verklappen nicht beschädigt werden. Dieses bedeutet, dass der Fahrer von seinem Fahrzeug absteigen muss, um das Entkoppeln bzw. das Wiederankoppeln vorzunehmen. Hinzu kommt, dass, wenn der Antrieb der Gelenkwelle in der stark gebeugten Stellung eingeschaltet wird, stark beschädigt werden können oder zu Bruch gehen.

## Aufgabenstellung

Hier setzt die Erfindung an, um einerseits eine Lösung vorzuschlagen, die ein Absteigen und manuelles Abkoppeln unter den zuvor genannten Bedingungen nicht erfordert und die die Sicherheit der Gelenkwelle gegen Beschädigung im verklappten Zustand erhöht.

## Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Die Erfindung sieht dabei vor, den Antriebsstrang zwischen dem ersten und dem wenigstens zweiten Maschinengestell als Gelenkwelle auszugestalten und diese so in Bezug auf die Scharnierachse des Klappgelenks anzuordnen, dass diese sich auf der Rückseite des Scharniergelenks befindet. Dabei wird die Schwenkbewegung der Gelenkwelle durch ein Koppelgetriebe zwangsläufig gesteuert, wobei dieses an dem Schwenkmechanismus angelenkt bzw. mit diesem gekoppelt ist.

Erfindungsgemäß besteht dabei zwischen dem Bewegungsablauf des Schwenkantriebs und dem Bewegungsablauf von Gelenkwelle und Außenrahmen eine Abhängigkeit derart, dass der Bewegungsablauf der Schwenkbewegung der Gelenkwelle und der Bewegungsablauf der Schwenkbewegung des Außenrahmens durch ein Koppelgetriebe so gesteuert wird, dass die Gelenkwelle beim Zusammenklappen des Schwenkrahmens dem Außenrahmen nacheilt und umgekehrt beim Auseinanderklappen voreilt.

Ein weiterer erfindungsgemäßer Vorteil besteht darin, dass im weiteren Verlauf der Schwenkbewegung dabei der Antriebsstrang zusätzlich und automatisch von dem wenigstens einen Antriebselement des Außenrahmens, welches beispielsweise zum Antrieb von Arbeitswerkzeugen dienen kann, abgekoppelt wird, welches eine Antriebsstrangunterbrechung beinhaltet. Letzteres schützt den Antriebsstrang gegen Überlast bei entsprechend großen Abwinkelungen der Gelenkwelle bei ungewollter Einschaltung im zusammengeklappten Zustand des Schwenkrahmens und schützt ihn dadurch vor Beschädigungen.

Der umgekehrte Schwenkvorgang zurück in die Arbeitsstellung hingegen läuft im umgekehrten Sinne ab und versetzt das Antriebssystem zurück in den Antriebsmodus.

**Ausführungsbeispiel**

Nähere Einzelheiten der Erfindung sind den nachfolgenden Figurendarstellungen und deren Beschreibungen zu entnehmen.

Es zeigen:

Fig. 1     zeigt den Schwenkrahmen eines Erntevorsatzgerätes in einer Draufsicht in Arbeitsstellung

Fig. 1a    zeigt einen vergrößerten Ausschnitt aus Fig.1

Fig. 2     zeigt den Schwenkrahmen eines Erntevorsatzgerätes in einer Draufsicht in Transportstellung

Fig. 2a    zeigt einen vergrößerten Ausschnitt aus Fig.2

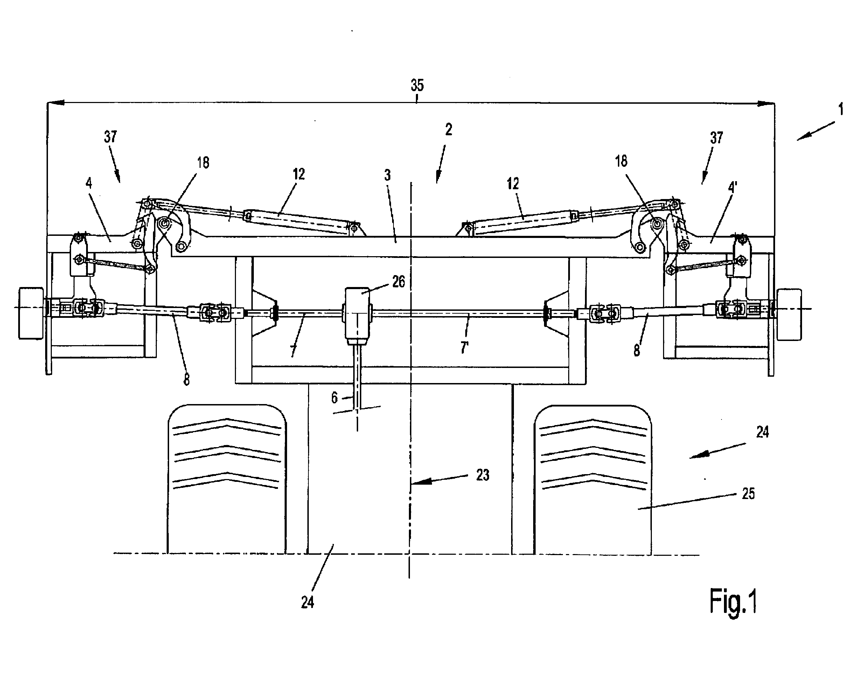

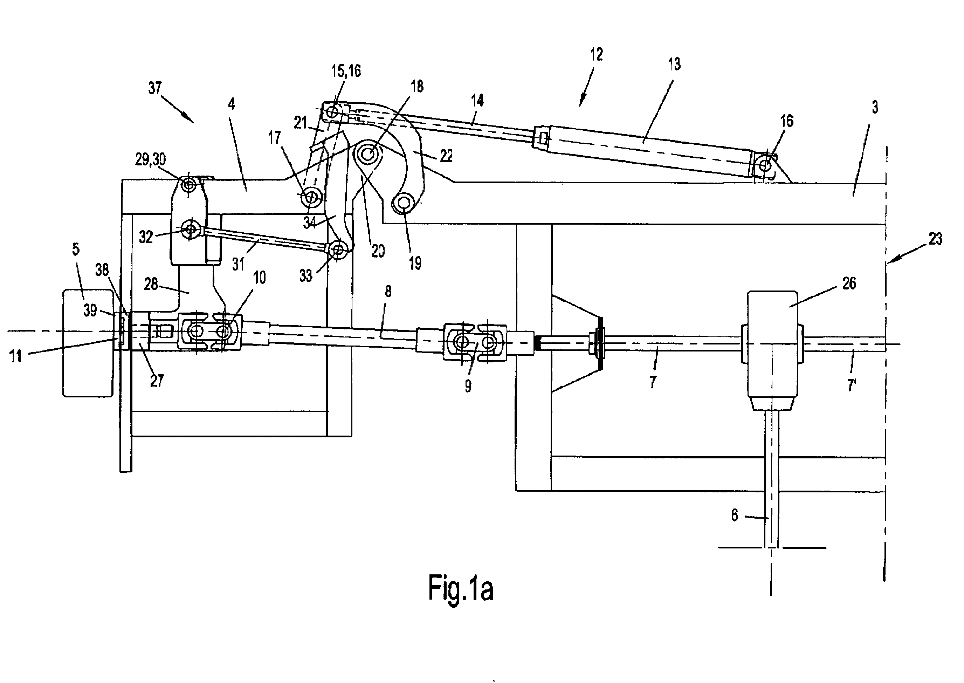

Fig.1 zeigt das Maschinengestell, ausgebildet als Schwenkrahmen 2 eines Erntevorsatzgerätes 1, z.B. das eines Pflückers zum Ernten von Mais, welches in einer Draufsicht in Arbeitsstellung, d.h. in auseinander geklappter Stellung mit der Arbeitsbreite 35 dargestellt ist.

Aus Gründen der besseren Übersichtlichkeit ist lediglich das Maschinengestell als Rahmenkonstruktion, ausgeführt als dreiteiliger Schwenkrahmen 2 dargestellt, wobei dieser aus einem ersten Maschinengestell 3 (Mittelrahmen) und zweiten Maschinengestellen 4,4' (Außenrahmen) besteht. Mittelrahmen 3 und Außenrahmen 4,4' sind in den Scharniergelenken 18 miteinander verbunden. In dem dargestellten Ausführungsbeispiel befinden sich somit beidseitig der Maschinenlängsmittelebene 23 je ein verklappbares zweites Maschinengestell 4 bzw. 4' als Außenrahmen, welche von je einem Stellantrieb 12, ausgeführt als hydraulisch beaufschlagter Differentialkolbenzylinder, von der Transportposition in die Arbeitsposition und umgekehrt verklappt werden können. Fig.1a zeigt die linke Hälfte des Maschinengestells gemäß Fig.1 in vergrößerter Darstellung.

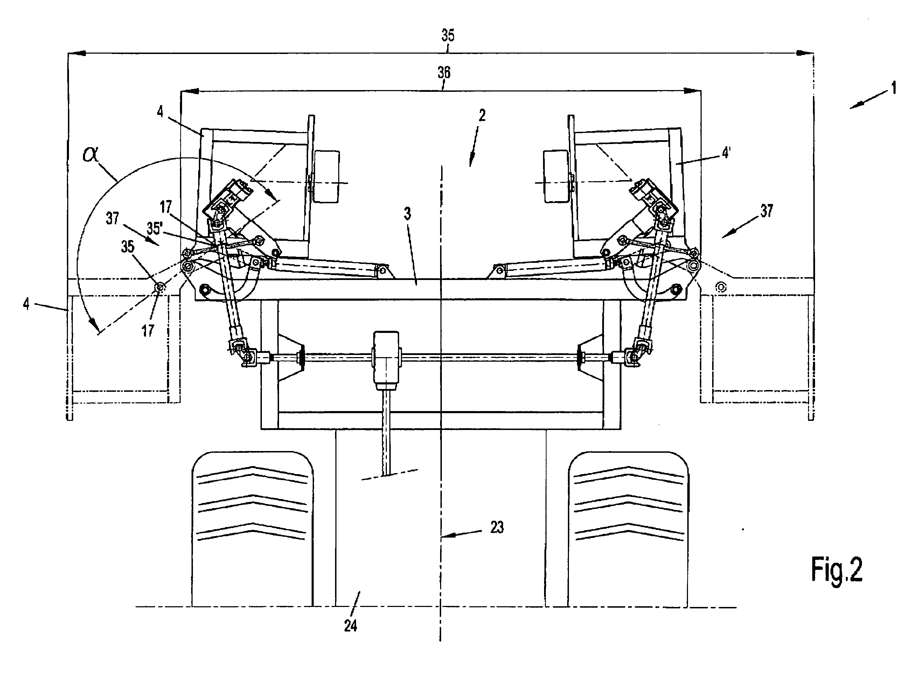

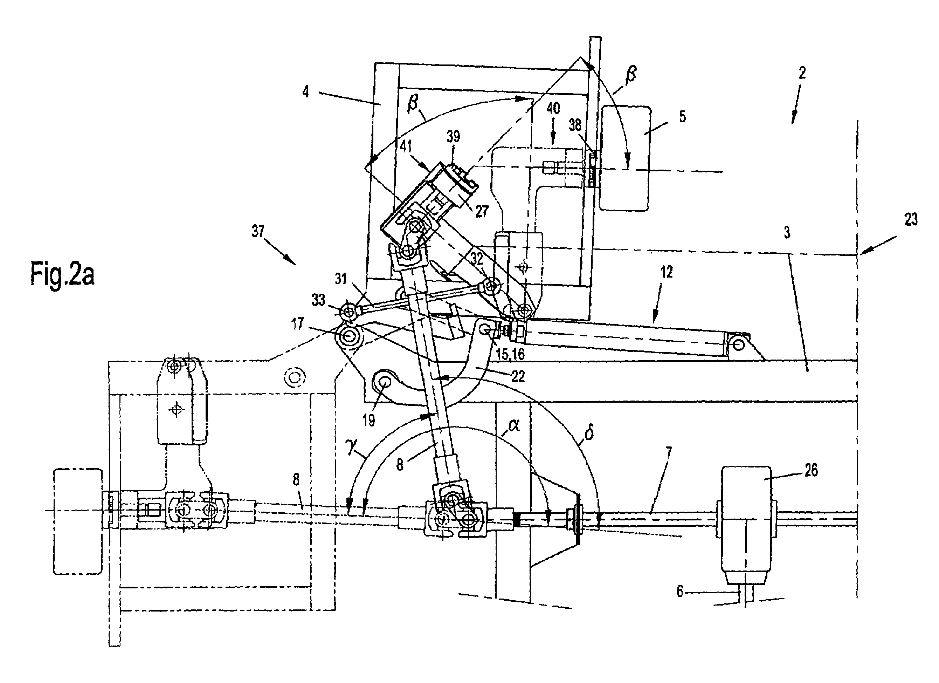

Fig.2 zeigt die Transportposition des Schwenkrahmens 2 eines Erntevorsatzgerätes 1 gemäß Fig.1 mit der Transportbreite 36, in der die äußeren Maschinengestelle 4,4' um etwa 180° nach innen in Richtung Maschinenlängsmittelebene 23 verklappt sind. Erntevorsatzgeräte 1 dieser Art werden vornehmlich an selbstfahrende Trägerfahrzeuge 24, wie beispielsweise Mähdrescher oder Feldhäcksler vor deren Vorderrädern 25 angebaut. Der Antrieb des Erntevorsatzgerätes 1 erfolgt über einen Antriebsstrang 6 vom Motor des Trägerfahrzeuges 24, der sich in weitere Antriebsstränge 7,7' innerhalb eines Getriebes 26 verzweigt, wie in dem Beispiel Fig. 1 dargestellt. Fig.2a zeigt die linke Hälfte des Maschinengestells gemäß Fig.2 in vergrößerter Darstellung.

Die verklappbaren äußeren Rahmenteile 4,4' des Schwenkrahmens 2 sind Träger für angetriebene Maschinenelemente, die aus Gründen der Übersichtlichkeit im Detail nicht dargestellt sind, die aber, wie in dem Ausführungsbeispiel Fig.1 bzw.
Fig.2 dargestellt, von einem Getriebe 26 bzw. dem Motor des Trägerfahrzeugs 24 ausgehend abgetrieben werden.

An dem Außenrahmen 4,4' ist ein Getriebe 5 befestigt, von dem aus der Antriebstrang 7 zu wenigstens einem angetriebenen Maschinenelement des Außenrahmen 4,4' weitergeführt wird.

Das Getriebe 5 wird dabei eingangsseitig von einer Gelenkwelle 8 angetrieben, welche mit dem Antriebsstrang 7 verbunden ist. Somit stellt die Gelenkwelle 8 die Fortsetzung des Antriebsstrangs 7,7' dar. Die Kreuzgelenke 9,10 ermöglichen ein Abwinkeln des Antriebsstrangs 7, der durch die Gelenkwelle 8 fortgesetzt ist.

Aber auch der Klappvorgang des Außenrahmens 4,4' wird durch die Beugung der Gelenkwelle 8 ermöglicht. Um bei großen Klappwinkeln α, wie im Ausführungsbeispiel in Fig.2 bzw. Fig.2a dargestellt etwa 180° gerade und insbesondere in räumlich beengten Verhältnissen die Gelenkwelle nicht von Hand abnehmen zu müssen, ist das Getriebe 5 am äußeren Rand des Außenrahmens 4,4' fest angebracht, wobei von dort aus die übrigen nicht dargestellten umlaufend angetriebenen Maschinenelemente mit entsprechenden nicht dargestellten Antriebssträngen angetrieben werden. Dieses ermöglicht es dann eine den räumlichen Grenzen entsprechende Gelenkwelle 8 mit maximaler Baulänge und ebenfalls maximaler Überdeckung der Schiebesitze der Gelenkwelle 8 zu verwenden, so dass beim Verschwenken der Gelenkwelle 8 die erforderliche Überdeckung der Schieberohre der Gelenkwelle stets vorhanden ist.

Zwischen dem Getriebegehäuse 5 und der Gelenkwelle 8 befindet sich eine Lagerstelle 27 und zwischen der Lagerstelle 27 und dem Getriebegehäuse 5 befindet sich eine Ausrückkupplung 11, welche im Betriebszustand eingerückt ist und somit die Drehenergie übertragen kann.

Die Lagerstelle 27 ist dabei auf einer Schwinge 28, die gleichzeitig als Lagerkonsole dient, abgestützt und mit dieser fest verbunden.

Die Schwinge 28 ist schwenkbar im Gelenkpunkt 29 an dem Außenrahmen 4 angeschlagen. Dabei steht die Gelenkachse 30 des Gelenkpunktes 29 schräg im Raum, welches sich während des Verklappens des Maschinegestells 4 günstig auf den Bewegungsablauf des Verschwenken der Gelenkwelle 8 auswirkt.

Die Schwinge 28 wird von einer Koppelstange 31 in deren vorgesehener Lage gehalten bzw. während des Verklappens von dieser gesteuert, wobei die Koppelstange 31 im Gelenkpunkt 32 an der Schwinge 28 angeschlagen ist.

Im Gelenkpunkt 33 ist die Koppelstange 31 mit dem Hebel 21 verbunden, wobei der Hebel 21 mit einem Ausleger 34 fest verbunden ist. Ausleger 34 und Hebel 21 bilden somit eine fest miteinander verbundene Einheit, so dass, wenn der Hebel 21 verschwenkt wird, der Ausleger 34 ebenfalls mit verschwenkt wird.

Der Hebel 21 ist im Gelenkpunkt 17 mit dem Außenrahmen 4,4' verbunden. Am freien Ende des Hebels 21 befindet sich der Gelenkpunkt 16, an dem gleichzeitig das Gelenkauge 15 der Kolbenstange 14 angeschlagen ist. Ebenfalls im Gelenkpunkt 16 ist eine gekrümmte Koppel 22 angeschlagen, die sich im Gelenkpunkt 19 des Mittelrahmens 3 abstützt. Hebel 21, Koppel 22 und Stellantrieb 12, ausgeführt als Hydraulikzylinder, bilden einen Schwenkantrieb, dessen Wirkungsweise dem Fachmann prinzipiell bekannt ist und diese daher an dieser Stelle keiner weiteren Erklärung bedarf.

Um das Erntevorsatzgerät 1 aus der Transportstellung gemäß Fig.1 in die Transportbreite 36 verringernde Stellung gemäß Fig.2 zu verklappen, wird der Stellantrieb 12 vom Fahrersitz des Fahrzeugführers so mit Druck beaufschlagt, dass die Kolbenstange in das Innere des Zylindergehäuses 13 hineinfährt, so dass der Außenrahmen 4,4' um die Schwenkachse des Scharniergelenks 18 verschwenkt.

Die Betätigung des Schwenkantriebs 12 verursacht auch einen Schwenkvorgang des Hebels 21, an dem die Koppelstange 31 im Gelenkpunkt 33 angeschlagen ist. Am anderen Ende der Koppelstange 31 ist diese im Gelenkpunkt 32 an der Schwinge 28 angeschlagen, so dass die Schwinge 28 durch Mitnahme der Koppelstange 31 im Gelenkpunkt 29 um die Gelenkachse 30 verschwenkt wird.

Während der Außenrahmen 4,4' bis zur Erreichung seiner Endstellung als Transportstellung dabei den Schwenkwinkel α überstreicht, eilt die Schwinge 28 der Schwenkbewegung des Außenrahmens 4,4' um den Schwenkwinkel β nach. Dabei ist der Schwenkwinkel β definiert durch die Schwenkwinkeldifferenz, welche sich einstellt zwischen der virtuellen Endlage 40 der Schwinge 28, die sich dann einstellen würde wenn die Schwinge 28 gleichermaßen den vollen Schwenkwinkel α überstreicht, und der tatsächlichen Endlage 41 der Schwinge 28 im vollverklappten Zustand der Transportstellung.

Somit erfährt die Schwinge 28 durch den Klappvorgang eine Änderung Ihrer Raumkoordinaten in Bezug auf den Mittelrahmen 3, und zum Anderen eine Verdrehung um den Schwenkwinkel β relativ zum Außenrahmen 4,4'. Dabei wird der Schwenkwinkel β durch die Koppelbewegung der Koppelstange 31 mit dem Hebel 21 erzwungen bzw. gesteuert.

In dieser Abfolge der Schwenkbewegungen, die des Außenrahmens 4,4' und der Schwinge 28 überstreicht die Gelenkwelle 8 den Schwenkwinkel γ, so dass auch die Gelenkwelle 8 der Schwenkbewegung des Außenrahmens 4,4' folgt diesem aber mit abnehmendem Schwenkwinkel β gegenüber dem Schwenkwinkel α nacheilt. In der Endlage des zusammengeklappten Schwenkrahmens 2 ergibt sich somit eine Schwenkwinkeldifferenz δ zwischen dem Schwenkwinkel α des Außenrahmens 4,4' und dem Schwenkwinkel γ der Gelenkwelle 8 nach der Beziehung

$$\delta = \alpha - \gamma$$

Ein besonderer erfinderischer Vorteil besteht darin, dass bedingt durch dieses Koppelgetriebe 37 bestehend aus den Elementen Mittelrahmen 3, Außenrahmen 4, Stellantrieb 12, Koppel 22, Hebel 21, Koppelstange 31 und Schwinge 28 die Schwenkwinkeldifferenz δ besonders in den Intervallgrenzen $\alpha/2 \pm \alpha/4$ liegen kann. Damit würde der Schwenkwinkel γ der Gelenkwelle in dem Intervall liegen

$$\gamma = \alpha - (\alpha/2 \pm \alpha/4)$$

Dieses führt dazu, dass der Bewegungsablaufs der Gelenkwelle 8 dem Bewegungsablauf des Außenrahmens 4,4' mit deutlich geringerem Beugungswinkel bzw. mit deutlich geringerem Schwenkwinkel γ der Gelenkwelle 8 zurückbleibend nacheilt.

Da die Schwinge 28 in ihrem Bewegungsablauf ebenfalls der Schwenkbewegung des Außenrahmens 4,4' wegen der Schwenkwinkeldifferenz β nacheilt, eilt diese auch dem Getriebe 5 entsprechend zurückbleibend nach, wodurch die beiden Kupplungshälftendie erste Kupplungshälfte 38 und die zweite Kupplungshälfte 39 der Ausrückkupplung 11 außer Eingriff gelangen und dadurch der Antriebsstrang 7 zum Getriebe 5 unterbrochen ist. Damit die Kupplungshälften 38,39 beim Ausklappen zurück in die Arbeitsstellung auch dann wieder im eingerückten Zustand formschlüssig zusammenfinden, ist zumindest eine der Kupplungshälften durch eine Druckfeder in axialer Richtung vorgespannt, so dass zumindest eine Kupplungshälfte 38 oder 39 für den Fall, dass eine Drehwinkelverschiebung gegenüber der eingerückten Position stattgefunden hat, vorübergehend solange der anderen Kupplungshälfte ausweichen kann, bis sie bei Einschaltung des Antriebsstrangs 7 automatisch und vollständig unter Einwirkung der Federkraft wieder einrücken kann.

## Bezugszeichenliste

| | |
|---|---|
| 1 | Erntevorsatzgerät |
| 2 | Schwenkrahmen (Maschinegestell) |
| 3 | Mittelrahmen (erstes Maschinengestell) |
| 4,4' | Außenrahmen (zweites Maschinengestell) |
| 5 | Getriebe (antreibbares Maschinenelement) |
| 6 | Antriebsstrang |
| 7,7' | Antriebsstrang |
| 8 | Gelenkwelle, (schwenkbeweglicher Tei des Antriebsstrangs) |
| 9 | Kreuzgelenk |
| 10 | Kreuzgelenk |
| 11 | Ausrückkupplung |
| 12 | Stellantrieb |
| 13 | Zylindergehäuse |
| 14 | Kolbenstange |
| 15 | Gelenkauge |
| 16 | Gelenkpunkt |
| 17 | Gelenkpunkt |
| 18 | Scharniergelenk |
| 19 | Gelenkpunkt |
| 20 | |
| 21 | Hebel |
| 22 | Koppel |
| 23 | Maschinenlängsmittelebene |
| 24 | Trägerfahrzeug |
| 25 | Vorderräder |
| 26 | Getriebe |
| 27 | Lagerstelle |
| 28 | Schwinge (Winkelhebel) |
| 29 | Gelenkpunkt |
| 30 | Gelenkachse |
| 31 | Koppelstange |
| 32 | Gelenkpunkt |
| 33 | Gelenkpunkt |
| 34 | Ausleger |
| 35 | Arbeitsbreite |
| 36 | Transportbreite |
| 37 | Koppelgetriebe |
| 38 | erste Kupplungshälfte |
| 39 | zweite Kupplungshälfte |
| 40 | virtuelle Endlage |
| 41 | tatsächliche Endlage |
| α | Schwenkwinkel (Klappwinkel) |
| β | Schwenkwinkel |
| γ | Schwenkwinkel |
| δ | Schwenkwinkeldifferenz |

## Patentansprüche

1. Erntevorsatzgerät mit Schwenkrahmen bestehend aus wenigstens einem ersten Maschinengestell ausgebildet als Mittelrahmen (3) und wenigstens einem zweiten Maschinengestell ausgebildet als schwenkbeweglicher Außenrahmen (4 oder 4'), wobei das wenigstens zweite Maschinengestell wenigstens ein antreibbares Maschinenelement umfasst, welches mit einem Antriebsstrang (7) des ersten Maschinengestells in Antriebsverbindung steht, wobei die Antriebsverbindung zwischen dem Antriebsstrang (7) des ersten Maschinengestells und der Fortsetzung des Antriebsstrangs (7) zum zweiten Maschinengestell eine Gelenkwelle (8) umfasst, **dadurch gekennzeichnet, dass** der schwenkbewegliche Teil (8) des Antriebsstrangs (7) eine Gelenkwelle mit Kreuzgelenken (9,10) umfasst, welche endseitig mittels einer Ausrückkupplung (11) zur Übertragung der Drehenergie an nachfolgende Maschinenelemente verbunden ist, wobei die erste Kupplungshälfte (38) der Ausrückkupplung (11) antriebsseitig mit dem schwenkbewegliche Teil (8) und die zweite Kupplungshälfte (39) der Ausrückkupplung (11) antriebsseitig mit einem Getriebe (5) als Fortsetzung des Antriebsstrangs zum Antrieb der nachfolgenden Maschinenelemente verbunden ist, wobei während des Klappvorgangs des Außenrahmens (4,4') in die Transportstellung durch eine Koppelstange (31) eines Koppelgetriebe (37) die erste Kupplungshälfte (38) aus der zweiten Kupplungshälfte (39) **dadurch** ausrückt und den Antriebsstrang (7) unterbricht, indem durch die Schwenkbewegung des schwenkbewegliche Teils (8) dieser dem Außenrahmens (4 und/oder 4') und damit dem Getriebe (5) und der Kupplungshälfte (39) zurückbleibend nacheilt.

2. Erntevorsatzgerät mit Schwenkrahmen nach Anspruch 1, **dadurch gekennzeichnet, dass** der schwenkbewegliche Teil (8) des Antriebsstrangs (7) als Gelenkwelle (8) ausgebildet ist,

3. Erntevorsatzgerät mit Schwenkrahmen nach Anspruch 1, **dadurch gekennzeichnet, dass** das Koppelgetriebe (37) eine Lenkerkopplung umfasst, welche mit dem Stellantrieb (12) in Wirkverbindung steht.

4. Erntevorsatzgerät mit Schwenkrahmen nach Anspruch 1 bis 3, **dadurch gekennzeichnet, dass** die Lenkerkopplung des Koppelgetriebes (37) eine Schwinge (28) umfasst, welche eine Lagerstelle (27) des fortgesetzten Antriebsstrangs (7) aufnimmt.

5. Erntevorsatzgerät mit Schwenkrahmen nach Anspruch 1 bis 4, **dadurch gekennzeichnet, dass** der fortgesetzte schenkbewegliche Teil des Antriebsstranges (7) eine Ausrückkupplung (11) umfasst, welche während des Klappvorgangs in die Transportstellung durch die Lenkerkopplung des Koppelgetriebes (37) ausgerückt wird und den Antriebsstrang unterbricht.

6. Erntevorsatzgerät mit Schwenkrahmen nach Anspruch 1 bis 5, **dadurch gekennzeichnet, dass** die Schwenkbewegung der Schwinge (28), **gekennzeichnet durch** den Schwenkwinkel (β), relativ zum Außenrahmen (4,4') erfolgt.

7. Erntevorsatzgerät mit Schwenkrahmen nach Anspruch 1 bis 6, **dadurch gekennzeichnet, dass** die Schwenkbewegung der Gelenkwelle (8), **gekennzeichnet durch** den Schwenkwinkel (γ), der Schwenkbewegung des Außenrahmens (4,4'), **gekennzeichnet durch** den Schwenkwinkel (α) abnehmend nacheilt.

8. Erntevorsatzgerät mit Schwenkrahmen nach Anspruch 1 bis 7, **dadurch gekennzeichnet, dass** der Schwenkwinkel (γ) der Gelenkwelle (8) relativ zum Schwenkwinkel (α), in den Intervallgrenzen γ = α - (α/2 ± α/4) liegt

9. Erntevorsatzgerät mit Schwenkrahmen nach Anspruch 1 bis 8 **dadurch gekennzeichnet, dass** der Schwenkmechanismus zum Verklappen des Mittelrahmens 3 als erstes Maschinengestell dem wenigstens zweiten Außenrahmen (4 oder 4') als wenigstens zweiten Maschinengestells einen hydraulischen Stellantrieb (12) umfasst.

10. Erntevorsatzgerät mit Schwenkrahmen nach Anspruch 1 bis 9, **dadurch gekennzeichnet, dass** das Emtevorsatzgerät ein Pflücker zum Ernten von Fruchtständen für stängeligem Pflanzengut ist.

**Claims**

1. A front-mounted harvesting implement with a pivotal frame comprising at least one first machine frame structure in the form of a central frame (3) and at least one second machine frame structure in the form of a pivotably movable external frame (4 or 4'), wherein the at least second machine frame structure includes at least one drivable machine element drivingly connected to a drive train (7) of the first machine frame structure, wherein the drive connection between the drive train (7) of the first machine frame structure and the continuation of the drive train (7) to the second machine frame structure includes a cardan shaft (8), **characterised in that** the pivotably movable portion (8) of the drive train (7) includes a cardan shaft with universal joints (9, 10), which at the end is connected by means of a disconnection clutch (11) for transmission of the rotary energy to subsequent machine elements, wherein the first clutch half (38) of the disconnection clutch (11) is connected at the drive side to the pivotably movable portion (8) and the second clutch half (39) of the disconnection clutch (11) is connected at the drive side to a transmission (5) as a continuation of the drive train for the drive to the subsequent machine elements, wherein during the pivotal movement of the external frame (4, 4') into the transport position by a coupling rod (31) of a coupling transmission (37) the first clutch half (38) thereby disconnects from the second clutch half (39) and interrupts the drive train (7) by virtue of the pivotably movable portion (8) lagging behind the external frame (4 and/or 4') and therewith the transmission (5) and the clutch half (39) due to the pivotal movement of the pivotably movable portion (8).

2. A front-mounted harvesting implement with a pivotal frame according to claim 1 **characterised in that** the pivotably movable portion (8) of the drive train (7) is in the form of a cardan shaft (8).

3. A front-mounted harvesting implement with a pivotal frame according to claim 1 **characterised in that** the coupling transmission (37) includes a steering coupling which is operatively connected to the adjusting drive (12).

4. A front-mounted harvesting implement with a pivotal frame according to claims 1 to 3 **characterised in that** the steering coupling of the coupling transmission (37) includes a rocker arm (28) which accommodates a mounting location (27) of the extended drive train (7).

5. A front-mounted harvesting implement with a pivotal frame according to claims 1 to 4 **characterised in that** the extended pivotably movable portion of the drive train (7) includes a disconnection clutch (11) which is disconnected and interrupts the drive train during the pivotal movement into the transport position by the steering coupling of the coupling transmission (37).

6. A front-mounted harvesting implement with a pivotal frame according to claims 1 to 5 **characterised in that** the pivotal movement of the rocker arm (28) is effected **characterised by** a pivotal angle (β) relative to the external frame (4, 4').

7. A front-mounted harvesting implement with a pivotal frame according to claims 1 to 6 **characterised in that** the pivotal movement of the cardan shaft (8), **characterised by** the pivotal angle (γ) of the pivotal movement of the external frame (4, 4'), decreasingly lags, **characterised by** the pivotal angle (α).

8. A front-mounted harvesting implement with a pivotal frame according to claims 1 to 7 **characterised in that** the pivotal angle ($\gamma$) of the cardan shaft (8) relative to the pivotal angle ($\alpha$) is in the range limits $\gamma = \alpha - (\alpha/2 \pm \alpha/4)$.

9. A front-mounted harvesting implement with a pivotal frame according to claims 1 to 8 **characterised in that** the pivoting mechanism for pivotal movement of the central frame (1) as the first machine frame structure, the at least second external frame (4 or 4') as the at least second machine frame structure, includes a hydraulic adjusting drive (12).

10. A front-mounted harvesting implement with a pivotal frame according to claims 1 to 9 **characterised in that** the front-mounted harvesting implement is a picker for harvesting fruit crops for stalked plants.

**Revendications**

1. Outil de récolte frontal doté d'un châssis pivotant, constitué d'au moins un premier châssis de machine, agencé sous forme de cadre central (3), et d'au moins un deuxième châssis de machine agencé sous forme de cadre extérieur (4 ou 4') pivotant, le, au moins, deuxième châssis de machine comprenant au moins un élément de machine qui est susceptible d'être entraîné et est en liaison d'entraînement avec une ligne de transmission (7) du premier châssis de machine, la liaison d'entraînement entre la ligne de transmission (7) du premier châssis de machine et le prolongement de la ligne de transmission (7) vers le deuxième châssis de machine comprenant un arbre de transmission à joints de Cardan (8), **caractérisé par le fait que** la partie pivotante (8) de la ligne de transmission (7) comporte un arbre articulé qui est doté de joints de Cardan (9, 10) et dont une extrémité est reliée au moyen d'un mécanisme de débrayage (11) à des éléments de machine montés à la suite, en vue de la transmission de l'énergie de rotation, le premier demi-accouplement (38) du mécanisme de débrayage (11) étant relié, côté entraînement, à la partie pivotante (8) et le deuxième demi-accouplement (39) du mécanisme de débrayage (11) étant relié, côté entraînement, à un mécanisme de transmission (5) prévu en tant que prolongement de la ligne de transmission, en vue de l'entraînement des éléments de machine qui suivent, sachant que pendant l'opération de basculement du cadre extérieur (4, 4') dans la position de transport, sous l'action d'une bielle (31) d'un mécanisme à bielles (37), le premier demi-accouplement (38) est ainsi dégagé du deuxième demi-accouplement (39) et interrompt la ligne de transmission (7) **par le fait qu'**en raison du mouvement pivotant de la partie pivotante (8), cette dernière suit avec un décalage le cadre extérieur (4 et/ou 4') et donc le mécanisme de transmission (5) et le demi-accouplement (39).

2. Outil de récolte frontal doté d'un châssis pivotant selon la revendication 1, **caractérisé par le fait que** la partie pivotante (8) de la ligne de transmission (7) est réalisée sous forme d'arbre de transmission à joints de Cardan (8).

3. Outil de récolte frontal doté d'un châssis pivotant selon la revendication 1, **caractérisé par le fait que** le mécanisme à bielles (37) comporte un couplage de bielles qui est en liaison active avec le mécanisme de commande (12).

4. Outil de récolte frontal doté d'un châssis pivotant selon les revendications 1 à 3, **caractérisé par le fait que** le couplage de bielles du mécanisme à bielles (37) comporte un balancier (28) qui reçoit un point d'appui (27) de la ligne de transmission (7) prolongée.

5. Outil de récolte frontal doté d'un châssis pivotant selon les revendications 1 à 4, **caractérisé par le fait que** la partie pivotante prolongée de la ligne de transmission (7) comprend un mécanisme de débrayage (11) qui, pendant l'opération de basculement dans la position de transport, est dégagé par le couplage de bielles du mécanisme à bielles (37) et interrompt la ligne de transmission.

6. Outil de récolte frontal doté d'un châssis pivotant selon les revendications 1 à 5, **caractérisé par le fait que** le mouvement pivotant du balancier (28), qui se **caractérise par** l'angle de pivotement ($\beta$), s'effectue par rapport au cadre extérieur (4, 4').

7. Outil de récolte frontal doté d'un châssis pivotant selon les revendications 1 à 6, **caractérisé par le fait que** le mouvement pivotant de l'arbre de transmission à joints de Cardan (8), qui se **caractérise par** l'angle de pivotement ($\gamma$), suit en diminuant le mouvement pivotant du cadre extérieur (4, 4'), qui se **caractérise par** l'angle de pivotement ($\alpha$).

8. Outil de récolte frontal doté d'un châssis pivotant selon les revendications 1 à 7, **caractérisé par le fait que**, rapporté à l'angle de pivotement ($\alpha$), l'angle de pivotement ($\gamma$) de l'arbre à joints de Cardan (8) se situe dans les limites d'intervalle $\gamma = \alpha - (\alpha/2 \pm \alpha/4)$.

9. Outil de récolte frontal doté d'un châssis pivotant selon les revendications 1 à 8, **caractérisé par le fait que** le mécanisme de pivotement destiné à faire basculer le cadre central (3), en tant que premier châssis de machine, et le deuxième cadre extérieur (4 ou 4'), en tant qu'au moins deuxième châssis de machine, comprend un mécanisme de commande (12) hydraulique.

10. Outil de récolte frontal doté d'un châssis pivotant selon les revendications 1 à 9, **caractérisé par le fait que** l'outil de récolte frontal est un cueilleur destiné à récolter les fruits de plantes à tiges.

Fig.1

Fig.1a

Fig.2

Fig.2a

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0890301 A1
- DE 4322263 A1
- EP 0056118 A1
- DE 2026190